# EUROPÄISCHE PATENTSCHRIFT

(11) **EP 2 608 975 B1**
(45) Veröffentlichungstag und Bekanntmachung des Hinweises auf die Patenterteilung: **16.01.2019**
(21) Anmeldenummer: 11745782.0
(22) Anmeldetag: 18.08.2011
(51) Int. Cl.: B60J 7/043

(54) **SCHIEBEHEBEDACH FÜR EIN FAHRZEUG MIT EINER DACHÖFFNUNG, IN DER EIN MITTELHOLM ANGEORDNET IST**
SLIDING ROOF PANEL FOR A VEHICLE WITH A CENTRAL BEAM IN THE ROOF OPENING
PANNEAU DE TOIT COULISSANT DE VÉHICULE AVEC UNE BARRE DE RENFORCEMENT LONGITUDINALE DANS L'OUVERTURE DU TOIT

(30) Priorität: 25.08.2010 DE 102010039726
(43) Veröffentlichungstag der Anmeldung: 03.07.2013
(73) Patentinhaber: Bayerische Motoren Werke Aktiengesellschaft, 80809 München (DE)
(72) Erfinder: WALTER, Alexander, 80796 Muenchen (DE); MINATTI, Johann, 80935 Muenchen (DE)
(86) Internationale Anmeldenummer: PCT/EP2011/064221
(87) Internationale Veröffentlichungsnummer: WO 2012/025452

(56) Entgegenhaltungen:
- EP-A2- 1 564 051
- DE-A1- 10 211 860
- DE-A1-102009 052 451
- DE-C1- 3 839 402
- JP-A- 5 085 182
- JP-A- 61 060 321

## Beschreibung

Die Erfindung betrifft ein Fahrzeug mit einem Schiebehebedach mit einer von einem Deckel verschließbaren Dachöffnung, in der ein Mittelholm angeordnet ist.

Ein Schiebehebedach weist in der EP 1 564 051 A2 einen Deckel auf, der in seiner Schließlage eine Dachöffnung verschließt und nach dem Ausstellen seiner Hinterkante nach hinten in eine Offenlage verstellbar ist. Zur Führung des Deckels ist in einem seitlich mittleren Mittelholm in der Dachöffnung eine Mittelholmführung ausgebildet, in der ein mit dem Deckel verbundenes Gleitelement entlang gleitet. Eine motorische Verstellkraft wird an dem Deckel über einen Zahnriemen in der Mittelholmführung bewirkt, der von einem im hinteren Bereich des Mittelholmes abgestützten motorischen Antrieb verstellbar ist. Zur weiteren Führung des Deckels sind an den beiden hinteren Seitenbereichen des Deckels jeweils im Dachbereich hinter der Dachöffnung in oben offenen Dachführungen längsverstellbar geführte Ausstellhebel vorgesehen, die von einer seitlich neben dem Fahrzeug befindlichen Person einsehbar und zugänglich sein dürften und eventuell als optisch störend empfunden werden. Durch die jeweils seitliche Anordnung der Dachführungen sind diese weniger geschützt und sammeln eventuell vom mittleren Dachbereich seitlich abfallendes Laub oder von der Fahrbahn aufgewirbelten Schmutz, wodurch ein Längsverstellen der Ausstellhebel bzw. ihrer Gleitelemente erschwert oder eventuell verhindert werden kann. Eventuell werden dabei Teile der Verstellmechanik des Deckels beschädigt. Um dies zu verhindern, sind eventuell für beide Dachführungen Abdeckblenden erforderlich. Insbesondere die seitlichen Verstellmechaniken für den Deckel erfordern einen Bauraum, der die Kopffreiheit der im Fahrgastraum befindlichen Personen einschränkt. Das Schiebehebedach erfordert viele Bauteile, die aufwändig zu fertigen sind und entsprechende Kosten verursachen.
Ein gattungsgemäßes Fahrzeug mit einem Schiebehebedach mit einer von einem Deckel verschließbaren Dachöffnung ist in der JP 5085182 A gezeigt.
Es ist die Aufgabe der vorliegenden Erfindung, ein Fahrzeug mit einem Schiebehebedach der eingangs genannten Art zu schaffen, wobei der Deckel eine alternative, verbesserte Lagerung aufweist, die eine größere Stabilität hat und trotzdem vor äußeren Umwelteinflüssen geschützt ist.
Diese Aufgabe ist durch die Merkmale im Patentanspruch 1 gelöst. Vorteilhafte Ausgestaltungen der Erfindung sind den Unteransprüchen entnehmbar.

Das Schiebehebedach des erfindungsgemäßen Fahrzeugs weist die Merkmale von Anspruch 1 auf. Eine zusätzliche Dachlängsführung ist in diesem Fall nicht erforderlich und deshalb nicht vorgesehen. Bei geschlossenem Deckel sind die Mittelholmführungen von dem Deckel überdeckt, so dass diese geschützt sind.
Ein Ausführungsbeispiel der Erfindung ist anhand einer Zeichnung näher erläutert. Es zeigen
- Fig. 1: ein Ausführungsbeispiel in einer perspektivischen, vereinfachten Ansicht auf ein Schiebehebedach eines Kraftfahrzeugs bei in Offenlage befindlichem Deckel,
- Fig. 2: das in Fig. 1 dargestellte Schiebehebedach in einer Seitenansicht,
- Fig. 3: der Deckel gemäß den Figuren 1 und 2 in einer perspektivischen Ansicht von hinten links unten,
- Fig. 4: ein nicht beanspruchtes Vergleichsbeispiel in einer vereinfachten Draufsicht auf ein Schiebehebedach eines Kraftfahrzeugs bei geschlossenem Deckel,
- Fig. 5: eine Ansicht gemäß Fig. 4 bei in Offenlage befindlichem Deckel und
- Fig. 6: eine vereinfachte seitliche Schnittansicht durch das geschlossene Schiebehebedach in Fig. 4.

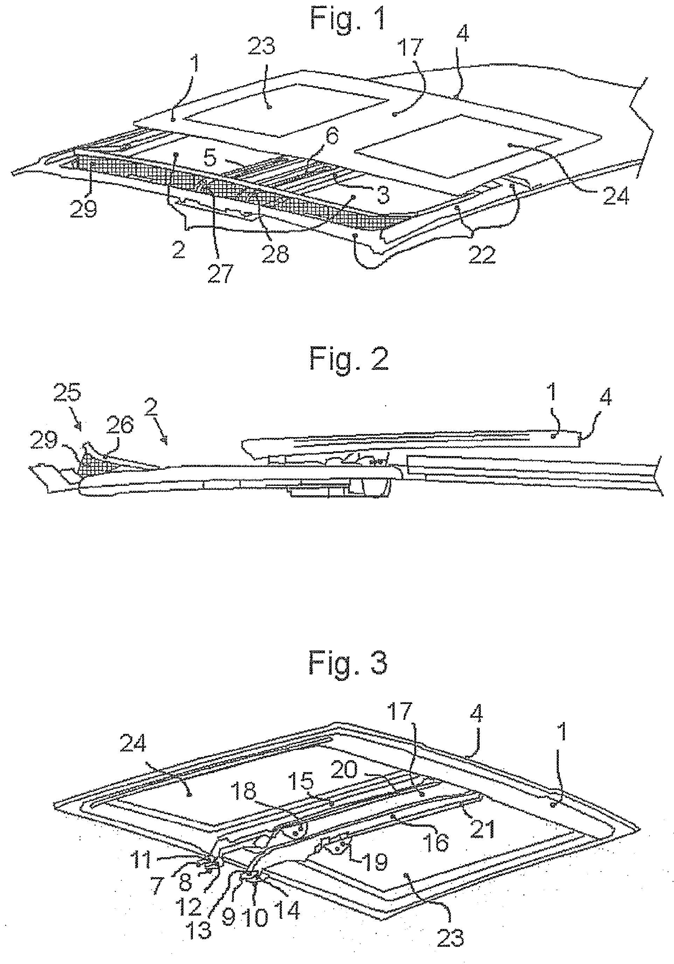

In Figur 1 ist gemäß einem Ausführungsbeispiel ein Schiebehebedach eines Kraftfahrzeugs in einer perspektivischen, vereinfachten Ansicht dargestellt, das eine von einem Deckel 1 verschließbare Dachöffnung 2 aufweist. Wie der Figur zu entnehmen ist, befindet sich in der in Seitenmitte der Dachöffnung 2 ein Mittelholm 3, der zumindest vom vorderen unteren bis zum hinteren unteren Randbereich der Dachöffnung 2 verläuft. In der Figur befindet sich der Deckel 1 in seiner Offenlage, die eine maximale Offenlage ist, bis zu sich der Deckel 1 nach hinten verstellen lässt, wenn zuvor die Hinterkante 4 des geschlossenen Deckels 1 aus der Dachöffnung 2 nach oben ausgestellt wurde. Hierfür ist eine beliebige Verstellmechanik vorgesehen, die nicht dargestellt ist und beispielsweise dem Stand der Technik entsprechen kann. In der Offenlage des Deckels 1 ist die Dachöffnung 2 in einem größeren Bereich geöffnet. Dies ermöglicht eine entsprechende Be- und/oder Entlüftung des Fahrgastraumes. Außerdem kann eine im Fahrgastraum befindliche Person die Umgebung durch die geöffnete Dachöffnung ungetrübt beobachten.

Jeweils in einer etwa in Fahrzeuglängsrichtung verlaufenden, oben offenen Mittelholmführung 5, 6 im Mittelholm 3 sind mit einem seitlichen Abstand symmetrisch gegenüber jeweils zwei in Fig. 3 erkennbare Gleitelemente 7, 8 bzw. 9, 10 etwa in Fahrzeuglängsrichtung längsverstellbar geführt, die jeweils Paarweise im vorderen unterer Bereich des Deckels 1 um eine in Fahrzeugquerrichtung verlaufende Gleitelementachse 11, 12 bzw. 13, 14 mit einem zugeordneten, seitlich mittleren Stützträger 15 bzw. 16 schwenkbar verbunden sind, die an der Unterseite eines seitlich mittleren Bereiches 17 des Deckels 1 befestigt und von diesem mittleren Bereich 17 des Deckels 1 überdeckt sind.

Jeweils in einem Abstand hinter den vorderen Gleitelementen 7, 8 bzw. 9, 10 sind jeweils in einem seitlich mittleren Bereich des Fahrzeugs mit einem seitlichen Abstand voneinander symmetrisch gegenüber jeweils zwei weitere Führungsteile angeordnet, die in den Figuren nicht erkennbar sind, jedoch ähnlich wie die vorderen Gleitelemente 7, 8 bzw. 9, 10 jeweils Paarweise in eine zugeordnete Mittelholführung 5 bzw. 6 oder in eine zugeordnete weitere Mittelholmführungen im Mittelholm 3 jeweils etwa in Fahrzeuglängsrichtung längsverstellbar eingreifen.

Diese weiteren, bzw. hinteren Gleitelement sind über eine weitere Verstellmechanik mit wenigstens einem Verbindungsteil längsverstellbar und/oder um eine in Fahrzeugquerrichtung verlaufende reelle oder virtuelle, ortsfeste oder ortsveränderliche Schwenkachse schwenkbar oder zusätzlich relativ höhenverstellbar mit dem Deckel 1 verbunden oder beispielsweise vor oder beim Ausstellen der Hinterkante des geschlossenen Deckels aus der Dachöffnung nach oben über eine nicht dargestellte Koppelungseinrichtung mit dem Deckel 1 verbindbar. In dem letztgenannten Fall ist diese Verbindung des Verbindungsteiles mit dem Deckel 1 beim Schließen des geöffneten Deckels 1 von einer nicht dargestellten Entkoppelungseinrichtung von dem Deckel 1 lösbar. Einzelheiten zu dieser weiteren Verstellmechanik bzw. der Koppelungseinrichtung und der Entkoppelungseinrichtung sind in den Figuren nicht angegeben, da die weitere Verstellmechanik bzw. die Koppelungseinrichtung und die Entkoppelungseinrichtung beispielsweise jeweils eine bekannte, dem Stand der Technik entsprechende Verstellmechanik bzw. Koppelungseinrichtung bzw. Entkoppelungseinrichtung sein können.

Bei dem Ausführungsbeispiel ist jeweils ein in Fig. 3 erkennbares Verbindungsteil 18, 19 der jeweils wenigstens ein Verbindungsteil aufweisenden weiteren Deckelmechanik in einer zugeordneten Deckellängsführung 20 bzw. 21 an der Unterseite des Deckels 1 relativ etwa in Längsrichtung des Deckels 1 längsverstellbar geführt, wobei bei einer Rückverlagerung des mit seiner Hinterkante 4 nach oben ausgestellten Deckels 1 eine nicht dargestellte Halteeinrichtung das dem Verbindungsteil 18 bzw. 19 zugeordnete, nicht dargestellte Führungsteil in seiner nach dem Ausstellen der Hinterkante des Deckels1 erreichten Längslage in der zugeordneten Mittelholmführung 5 bzw. 6 oder in einer zugeordneten weiteren Mittelholführung fest hält.

Wie insbesondere Fig. 1 entnommen werden kann, ist die Dachöffnung 1 in einem vorderen Bereich des Fahrzeugdaches ausgebildet und gemäß Fig. 3 jeweils seitlich außen sowie vorne und hinten von einem Rahmenteil 22 des Fahrzeugdaches begrenzt.

Den Figuren 1 und 3 ist entnehmbar, dass der Deckel 1 zwei einen seitlichen Abstand voneinander aufweisende Deckelbereiche 23, 24 aufweist, die für Licht zumindest teilweise durchlässig ausgebildet sind. Unter den lichtdurchlässigen Deckelbereichen 23, 24 des geschlossenen Deckels 1 sind jeweils ein separat einem lichtdurchlässigen Deckelbereich 23 bzw. 24 zugeordnetes, nicht dargestelltes Abdeckteil zwischen einer den zugeordneten Deckelbereich 23 bzw. 24 zumindest größtenteils frei gebenden Offenlage und einer den zugeordneten Deckelbereich 23, bzw. 24 zumindest größtenteils verschließenden Schließlage verstellbar, beispielsweise aufrollbar. Die beiden separaten Abdeckteile können in Fahrzeuglängsrichtung oder in Fahrzeugquerrichtung verstellbar, beispielsweise aufrollbar angeordnet sein.

Die beiden separaten Abdeckteile können jeweils zumindest an einem vorderen Bereich direkt oder mittelbar mit einem Führungselement verbunden sein, das in einer zugeordneten Längsführung im Mittelholm längsverstellbar geführt ist.

Der geschlossene und/oder zumindest teilweise geöffnete Deckel 1 kann jeweils an seinen Seitenbereichen an einem benachbarten seitlichen Dachlängsholm des Fahrzeugdaches verriegelbar sein.

Der Deckel 1 kann an seinen Seitenbereichen jeweils wenigstens eine nicht dargestellte Stützfläche aufweisen, die sich bei geschlossenem Deckel 1 und/oder bei zumindest teilweise geöffnetem Deckel 1 ständig oder zumindest nach einer beispielsweise durch Windkräfte bewirkten kleinen Rollbewegung des Deckels 1 um eine ideelle Fahrzeuglängsachse einzeln oder zumindest teilweise mit weiteren derartigen Stützflächen gemeinsam an wenigstens einer Gegenstützfläche an einem benachbarten Dachlängsholm des Fahrzeugdaches abstützt.

Eine nicht dargestellte Abdichtung des Umfangsbereiches des geschlossenen Deckels 1 ist durch wenigstens ein Dichtungselement im Umfangsbereich des Deckels 1 und/oder am Rand der Dachöffnung 2 bzw. an einer den Deckel 1 verstellbar stützenden Dachkassette oder bei nicht vorhandener Dachkassette an einer Fahrzeugkomponente bewirkt. Außerdem wird eventuell durch einen Spalt zwischen der Dachöffnung 2 und dem Deckel 1 eingedrungenes Wasser über eine nicht dargestellte Wasserableiteinrichtung mit entsprechenden Wasserleitwänden an einer den Deckel 1 stützenden Dachkassette oder bei nicht vorhandener Dachkassette von Wasserleitwänden an einer Fahrzeugkomponente nach außen und/oder unten eventuell in einen mit der Umgebung verbundenen Hohlraum abgeleitet.

Gemäß den Figuren 1 und 2 ist am vorderen Bereich der Dachöffnung 2 ein in die dargestellte Ausstelllage federbelasteter Windabweiser 25 angeordnet, der beim Schließen des geöffneten Deckels 1 von dem Deckel 1 oder einer Verstelleinrichtung in eine Rückzugslage verstellbar ist. Bei dem Ausführungsbeispiel weist der Windabweiser einen U-förmigen Bügel 26 auf, der an seinen Schenkelendbereichen schwenkbar am Fahrzeugdach angeordnet und von einem nicht dargestellten Federelement nach oben in die Ausstelllage belastet ist. Zwischen der Basis und den Schenkeln des Bügels 26 ist beispielsweise ein Windableitnetz 29 angeordnet, das beispielsweise faltbar und/oder dehnbar ist und an seinem unteren Randbereich am Fahrzeugdach bzw. an der Dachkassette befestigt ist. Beim Schließen des geöffneten Deckels 1 wird der Bügel 26 im Zusammenwirken mit dem Deckel 1 oder von einer Verstelleinrichtung in seine Rückzugslage nach unten in eine beispielweise etwa horizontale Lage verstellt.

Fig. 1 ist entnehmbar, dass bei dem Ausführungsbeispiel die etwa in Fahrzeuglängsrichtung verlaufenden, oben offenen Mittelholmführung 5, 6 im Mittelholm 3 an ihren vorderen Führungsbereichen 27, 28 jeweils nach vorne unten gekrümmt verlaufen. Damit wird bewirkt, dass bei einer Rückverlagerung des mit seiner Hinterkante 4 nach oben ausgestellten Deckels 1 nach hinten über die in den gekrümmten Führungsbereichen 27, 28 Paarweise entlang gleitenden Gleitelementen 7, 8, 9, 10 der vordere Bereich des Deckels 1 angehoben bzw. bei einer Rückverlagerung in die Dachöffnung 2 etwa außenhautbündig abgesenkt wird.

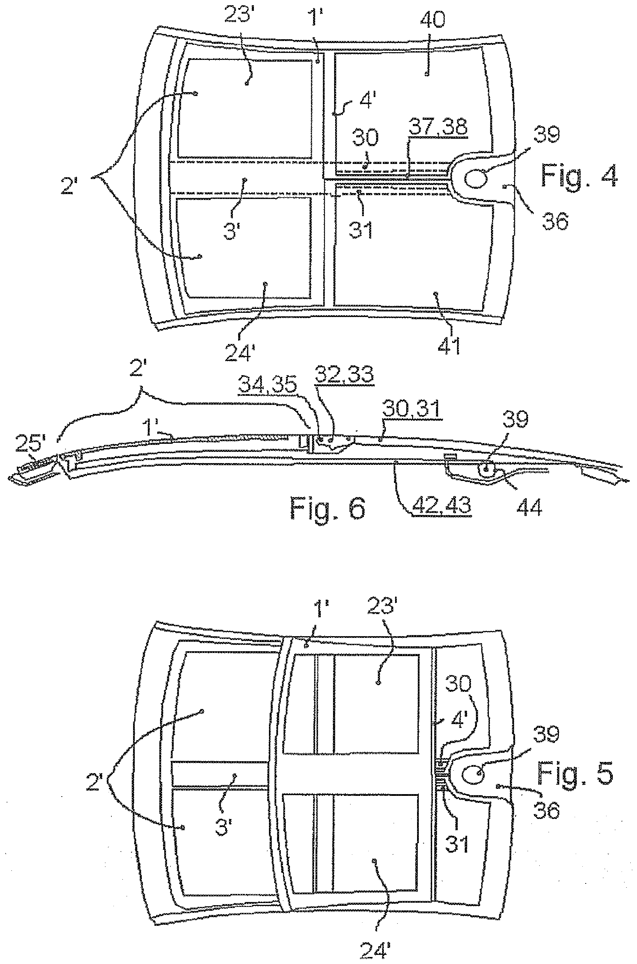

Ein nicht beanspruchtes Vergleichsbeispiel wird nachfolgend anhand der Figuren 4 bis 6 beschrieben, das mit dem Ausführungsbeispiel überein stimmende oder vergleichbare Bauteile aufweist, die zur Vermeidung einer wiederholten Beschreibung mit einer gleichen Bezugszahl und bei dem Vergleichsbeispiel teilweise zusätzlich mit einem hochgestellten Zeichen versehen sind.

Der Deckel 1' ist bei dem Vergleichsbeispiel an seinem vorderen, seitlich mittleren Bereich wie bei dem Ausführungsbeispiel abgestützt und kann ebenfalls mit seiner Hinterkante 4' aus einer die Dachöffnung 2' verschließenden Schließlage nach oben ausgestellt und zurück verlagert werden.

Bei dem Vergleichsbeispiel sind in einem Abstand hinter den nicht dargestellten vorderen Gleitelementen in einem seitlich mittleren Bereich des Fahrzeugs Paarweise seitlich nebeneinander jeweils zwei nicht dargestellte Führungsteile angeordnet, die Paarweise in jeweils einer oben offenen Dachlängsführung 30, 31 an der Außenseite eines Dachbereiches hinter der Dachöffnung 2' etwa in Fahrzeuglängsrichtung geführt und direkt oder über wenigstens ein Verbindungsteil 32 bzw. 33 längsverstellbar und/oder um eine in Fahrzeugquerrichtung verlaufende reelle oder virtuelle Schwenkachse 34 bzw. 35 schwenkbar oder zusätzlich relativ höhenverstellbar mit dem Deckel 1' verbunden oder beispielsweise beim Ausstellen des Deckels 1' über eine nicht dargestellte Koppeleinrichtung mit dem Deckel 1' verbindbar sind.

Bei dem zuletzt genannten Fall bewirkt eine nicht dargestellte Entkoppelungseinrichtung ein Lösen der Verbindungteile 32, 33 von dem Deckel 1', wenn der Deckel 1' geschlossen und hierzu in die Dachöffnung 2' abgesenkt wird. Die nicht dargestellten hinteren Führungsteile sind lediglich derart gering relativ gegenüber dem Deckel 1' etwa in Fahrzeuglängsrichtung in einer zugeordneten Dachlängsführung 30 bzw. 31 und eventuell im hinteren Bereich des Mittelholmes 3' in einer zugeordneten Mittelholmführung oder in einer weiteren Mittelholmführung längsverstellbar, dass der Deckel 1' mit seiner Hinterkante 4' aus der Dachöffnung 2' nach oben ausgestellt oder in die Dachöffnung 2' abgesenkt wird. Hierbei kann der Deckel 2' beispielsweise an seinem vorderen Bereich in seiner Längslage etwa festgehalten und/oder so fixiert sein, dass sein vorderer Bereich etwa in seiner Höhenlage verbleibt und eine vordere Dichtung nicht oder nicht übermäßig komprimiert.

Beim Verstellen des mit seiner Hinterkante 4' nach oben ausgestellten und für eine Längsbewegung nach hinten frei gegebenen Deckels 1' ändert sich der Abstand zwischen den nicht dargestellten vorderen Gleitelementen und den nicht dargestellten hinteren Führungsteilen nicht oder nicht wesentlich, die dabei in den zugeordneten Dachlängsführungen 30, 31 oder alternativ in weiteren oben offenen Dachlängsführungen entlang gleiten.

Eine an dem Deckel 1' wirksame Verstellkraft wird bei dem Vergleichsbeispiel über einen beispielsweise unter dem hinteren mittleren Dachbereich 36 angeordneten Motor 39 bewirkt, der beispielsweise ein Elektromotor ist und beispielsweise über wenigstens ein Seil 37 oder einen Zahnriemen 38 mit wenigstens einem hinteren, nicht dargestellten Führungsteil oder wenigstens mit einem vorderen, nicht dargestellten Gleitelement zumindest kraftübertragend verbunden ist.

Bei dem Vergleichsbeispiel weist der Deckel 1' zwei einen seitlichen Abstand voneinander aufweisende Deckelbereiche 23', 24' auf, die für Licht zumindest teilweise durchlässig ausgebildet sind. Zusätzlich weist der hintere Dachbereich zwei einen seitlichen Abstand voneinander aufweisende Dachabschnitte 40, 41 auf, die für Licht zumindest teilweise durchlässig ausgebildet sind.

Auf jeder Fahrzeugseite ist unter den lichtdurchlässigen Deckelbereichen 23', 24' und unter den lichtdurchlässigen Dachabschnitten 40, 41 jeweils ein seitlich gemeinsames Abdeckteil 42 bzw. 43 verstellbar bzw. bei dem Vergleichsbeispiel auf eine seitlich gemeinsame, in Fig. 6 dargestellte Rolle 44 auf- und abrollbar, wobei das betreffende seitlich gemeinsame Abdeckteil 42 bzw. 43 zwischen einer den zugeordneten Deckelbereich 23', 24' oder zusätzlich den betreffenden Dachabschnitt 42 bzw. 43 zumindest größtenteils frei gebenden Offenlage und einer den betreffenden Dachabschnitt 42 bzw. 43 oder zusätzlich den zugeordneten Deckelbereich 23', 24' zumindest größtenteils verschließenden Schließlage oder jeweils in eine Zwischenlage verstellt werden kann.

Selbstverständlich kann auch jedem der lichtdurchlässigen Deckelbereichen 23', 24' und lichtdurchlässigen hinteren Dachabschnitte 40, 41 jeweils ein separates verstellbares Abdeckteil oder mehreren oder allen Deckelbereichen 23', 24' und lichtdurchlässigen hinteren Dachabschnitte 40, 41 ein gemeinsames Abdeckteil zugeordnet sein, das beispielsweise im Wesentlichen in Fahrzeuglängsrichtung oder in Fahrzeugquerrichtung verstellbar bzw. in dieser Richtung auf eine Rolle aufrollbar oder von einer Rolle abrollbar ist. Ein gemeinsames oder separates Abdeckteil kann zumindest an einem vorderen Bereich direkt oder mittelbar mit einem Führungselement verbunden sein, das beispielsweise in einer zugeordneten Längsführung im Mittelholm im Wesentlichen längsverstellbar geführt ist.

Weitere bei dem ersten Ausführungsbeispiel getroffene Maßnahmen können auch bei dem Vergleichsbeispiel einzeln oder in einer beliebigen Kombination gemeinsam unmittelbar oder zumindest an das Vergleichsbeispiel angepasst realisiert sein.

Die Erfindung kann selbstverständlich von dem Ausführungsbeispiel mehr oder weniger abweichend ausgeführt sein. Die bei dem Ausführungsbeispiel oben offenen Mittelholmführungen können auch oben und/oder unten und/oder seitlich nach wenigstens einer zugeordneten Richtung offen ausgebildet sein. Bei einer besonders einfachen Ausführung ist ledig ein einziges vorderes Gleitelement und zusätzlich lediglich ein einziges hinteres Führungsteil vorgesehen, die ohne weiteres derart stabil ausgeführt sein können, dass der Deckel ohne eine seitliche, mit einer Gegenstützfläche zusammen wirkende Stützfläche oder zumindest mit einer derartigen Stützfläche in jeder Verstelllage ausreichend kippsicher angeordnet bzw. sofort oder zumindest nach einer kleinen Kippbewegung kippsicher abgestützt ist. Das Fahrzeug kann ein beliebiges Fahrzeug, beispielsweise ein Kraftfahrzeug bzw. ein Cabriolet sein. Im zuletzt genannten Fall kann der Deckel durch ein vorderes festes Dachteil oder durch einen Deckel an einem vorderen festen Dachteil gebildet sein. Die wenigstens eine Mittelholmführung kann an einem vorderen Dachteil eines Cabriolets und die wenigstens eine oben offene Dachlängsführung an demselben Dachteil oder an einem dahinter befindlichen weiteren, im Wesentlichen festen Dachteil ausgebildet sein, wobei das wenigstens eine weitere Dachteil gegenüber dem vorderen Dachteil und umgekehrt beliebig verstellbar sein können. Der Deckel kann auch an seinen seitlichen Deckelbereichen jeweils wenigstens ein Stützführungsteil aufweisen, das bei geschlossenem Deckel und/oder bei mit der Hinterkante ausgestelltem Deckel und/oder bei teilweise zurück verlagertem Deckel in eine dachseitige Stützführung etwa in Fahrzeuglängsrichtung verstellbar eingreift, die in einem Seitenbereich der Dachöffnung und/oder des Fahrzeugdaches hinter der Dachöffnung ausgebildet ist.

## Patentansprüche

1. Fahrzeug mit einem Schiebehebedach mit einer von einem Deckel (1) verschließbaren Dachöffnung (2) in der ein einziger Mittelholm (3) angeordnet ist, wobei der Deckel (1) mit seiner Hinterkante (4) aus der Dachöffnung (2) nach oben ausstellbar und rückverlagerbar ist, mit einer etwa in Fahrzeuglängsrichtung verlaufenden Mittelholmführung (5, 6) im Mittelholm (3), in der ein Gleitelement (7, 8, 9, 10) geführt ist, das direkt oder über wenigstens ein Zwischenteil fest oder um eine in Fahrzeugquerrichtung verlaufende reelle oder virtuelle Schwenkachse schwenkbar oder zusätzlich höhenverstellbar mit einem seitlich mittleren, vorderen unterer Bereich (17) des Deckels (1) verbunden ist, wobei in einem Abstand hinter dem Gleitelement (7, 8, 9, 10) in einem seitlich mittleren Bereich, d.h. in einem in Fahrzeugquerrichtung mittleren Bereich, des Fahrzeugs ein Führungsteil angeordnet ist, das in der Mittelholmführung (5, 6) oder in einer weiteren Mittelholmführung im Mittelholm, jedoch nicht in einer Dachlängsführung (30, 31) an der Außenseite eines Dachbereiches hinter der Dachöffnung in Fahrzeuglängsrichtung geführt und direkt oder über wenigstens ein Verbindungsteil (18, 19,) längsverstellbar und/oder um eine in Fahrzeugquerrichtung verlaufende reelle oder virtuelle Schwenkachse schwenkbar oder zusätzlich relativ höhenverstellbar mit dem Deckel (1) verbunden oder verbindbar ist,
**dadurch gekennzeichnet, dass**
die Dachöffnung (2) in einem vorderen Bereich des Fahrzeugdaches oder eines Dachteiles des Fahrzeugdaches ausgebildet ist, das die Dachöffnung (2) vollständig umgibt,
und wobei in dem einzigen Mittelholm (3) wenigstens zwei nach oben und/oder unten und/oder in wenigstens einer zugeordneten Richtung seitlich offene Mittelholmführungen (5, 6) ausgebildet sind, in denen jeweils wenigstens ein Gleitelement (7, 8, 9, 10) geführt ist, und die wenigstens zwei Gleitelemente (7, 9 bzw. 8,10) in verschiedenen Mittelholmführungen (5, 6) einen seitlichen Abstand voneinander aufweisen und jeweils direkt oder über wenigstens ein Zwischenteil fest oder um eine in Fahrzeugquerrichtung verlaufende reelle oder virtuelle Schwenkachse schwenkbar oder zusätzlich relativ höhenverstellbar mit einem seitlich mittleren, vorderen unterer Bereich des Deckels (1) verbunden sind.

2. Fahrzeug nach Anspruch 1, **dadurch gekennzeichnet, dass** der Mittelholm (5, 6) in einem seitlich mittleren Bereich der Dachöffnung (2) zumindest vom vorderen unteren bis zum hinteren unteren Randbereich der Dachöffnung (2) verläuft.

3. Fahrzeug nach einem der Ansprüche 1 oder 2, **dadurch gekennzeichnet, dass** beim Ausstellen der Hinterkante (4) des Deckels (1) aus der Dachöffnung (2) nach oben eine Koppeleinrichtung das von dem Deckel (1) gelöste Führungsteil oder das von dem Deckel (1) gelöste Verbindungsteil (18, 19) mit dem hinteren Bereich des Deckels (1) fest oder um die in Fahrzeugquerrichtung verlaufende reelle oder virtuelle Achse schwenkbar oder zusätzlich relativ höhenverstellbar verbindet und bei der Rückverlagerung des Deckels (1) in die Dachöffnung (2) eine Entkoppelungseinrichtung das Verbindungsteil (18, 19) von dem Deckel (1) löst.

4. Fahrzeug nach einem der Ansprüche 1 bis 3, **dadurch gekennzeichnet, dass** der Deckel (1) wenigstens zwei einen seitlichen Abstand voneinander aufweisende Deckelbereiche (23, 24) aufweist, die für Licht zumindest teilweise durchlässig ausgebildet sind, oder zusätzlich zumindest unter den lichtdurchlässigen Deckelbereichen (23, 24) ein insgesamt oder teilweise gemeinsames Abdeckteil oder jeweils ein separat einem lichtdurchlässigen Deckelbereich zugeordnetes Abdeckteil zwischen einer den zugeordneten Deckelbereich (23, 24) zumindest größtenteils frei gebenden Offenlage und einer den zugeordneten Deckelbereich (23, 24) zumindest größtenteils verschließenden Schließlage verstellbar ist.

5. Fahrzeug nach Anspruch 4, **dadurch gekennzeichnet, dass** das separate oder insgesamt oder teilweise gemeinsame Abdeckteil in Fahrzeuglängsrichtung oder in Fahrzeugquerrichtung verstellbar, beispielsweise aufrollbar, angeordnet ist.

6. Fahrzeug nach einem der Ansprüche 4 oder 5, **dadurch gekennzeichnet, dass** das separate oder insgesamt oder teilweise gemeinsame Abdeckteil zumindest an einem vorderen Bereich direkt oder mittelbar mit einem Führungselement verbunden ist, das in einer zugeordneten Längsführung im Mittelholm (5, 6) etwa in Fahrzeuglängsrichtung verstellbar geführt ist.

7. Fahrzeug nach einem der Ansprüche 1 bis 6, **dadurch gekennzeichnet, dass** der geschlossene und/oder zumindest teilweise geöffnete Deckel (1) jeweils an seinen Seitenbereichen an einem benachbarten seitlichen Dachlängsholm des Fahrzeugdaches verriegelbar ist.

8. Fahrzeug nach einem der Ansprüche 1 bis 7, **dadurch gekennzeichnet, dass** der Deckel an seinen Seitenbereichen jeweils wenigstens eine Stützfläche aufweist, die sich bei geschlossenem Deckel und/oder bei zumindest teilweise bzw. vollständig geöffnetem Deckel sofort oder zumindest nach einer beispielsweise durch Windkräfte bewirkten kleinen Rollbewegung des Deckels um eine ideelle Fahrzeuglängsachse an einer zugeordneten Gegenstützfläche an einem benachbarten Dachlängsholm des Fahrzeugdaches abstützt.

9. Fahrzeug nach einem der Ansprüche 1 bis 8, **dadurch gekennzeichnet, dass** der Deckel an seinen seitlichen Deckelbereichen jeweils wenigstens ein Stützführungsteil aufweist, das bei geschlossenem Deckel und/oder bei mit der Hinterkante ausgestelltem Deckel und/oder bei teilweise zurück verlagertem Deckel in eine dachseitige Stützführung etwa in Fahrzeuglängsrichtung verstellbar eingreift, die in einem Seitenbereich der Dachöffnung und/oder des Fahrzeugdaches hinter der Dachöffnung ausgebildet ist.

10. Fahrzeug nach einem der Ansprüche 1 bis 9, **dadurch gekennzeichnet, dass** der Deckel (1) von einem Kraftübertragungsteil eines Motors verstellbar ist, der in Fahrzeugquerrichtung etwa in der Fahrzeugmitte hinter der Dachöffnung (2) unter dem mittleren bis hinteren Dachbereich des Fahrzeugs angeordnet ist.

11. Fahrzeug nach einem der Ansprüche 1 bis 10, **dadurch gekennzeichnet, dass** eine Abdichtung des geschlossenen Deckels durch wenigstens ein Dichtungselement im Umfangsbereich des Deckels oder am Rand der Dachöffnung oder an einer den Deckel verstellbar stützenden Dachkassette oder bei nicht vorhandener Dachkassette an einer Fahrzeugkomponente und/oder eine Wasserableitung von über die beispielsweise geschlossene oder teilweise geöffnete Dachöffnung durch die Dachöffnung eingedrungenem Wasser von Wasserleitwänden an einer den Deckel stützenden Dachkassette oder bei nicht vorhandener Dachkassette von Wasserleitwänden an einer Fahrzeugkomponente bewirkt wird bzw. werden.

12. Fahrzeug nach einem der Ansprüche 1 bis 11, **dadurch gekennzeichnet, dass** am vorderen Bereich der Dachöffnung (2) ein in eine Ausstelllage federbelasteter Windabweiser (25) angeordnet ist, der beim Schließen des geöffneten Deckels (1) von dem Deckel (1) oder einer Verstelleinrichtung in eine Rückzugslage verstellbar ist.

## Claims

1. A vehicle with a sliding roof panel, comprising a roof opening (2) which can be closed by a cover (1) and in which a single central spar (3) is arranged, the rear edge (4) of the cover (1) being able to be moved upwards out of the roof opening (2) and backwards, comprising a central spar guide (5, 6) in the central spar (3), which extends approximately in the vehicle longitudinal direction and in which a sliding element (7, 8, 9, 10) is guided, said element being connected to a laterally central front lower region (17) of the cover (1) directly or via at least one intermediate part in a rigid manner or so as to be able to pivot about a real or virtual pivot axis that extends in the vehicle transverse direction, or additionally in a height adjustable manner, a guide part being arranged in a laterally central region, that is to say in a region which is central in the vehicle transverse direction, of the vehicle at a distance behind the sliding element (7, 8, 9, 10), and said guide part being guided in the central spar guide (5, 6) or in a further central spar guide in the central spar, but not in a roof longitudinal guide (30, 31) on the outer face of a roof region behind the roof opening in the vehicle longitudinal direction, and is connected or can be connected to the cover (1) directly or via at least one connecting part (18, 19) in a longitudinally adjustable manner and/or so as to be able to pivot about a real or virtual pivot axis that extends in the vehicle transverse direction, or additionally in a relatively height adjustable manner,
**characterised in that**
the roof opening (2) is formed in a front region of the vehicle roof or a part of the vehicle roof which completely surrounds the roof opening (2) and at least two central spar guides (5, 6) are formed in the single central spar (3), which are open laterally in an upward and/or downward direction and/or in at least one designated direction and in each of which at least one sliding element (7, 8, 9, 10) is guided, and the at least two sliding elements (7, 9 and 8, 10) in different central spar guides (5, 6) being at a lateral distance from one another and each being connected to a laterally central front lower region of the cover (1) directly or via at least one intermediate part in a rigid manner or so as to be able to pivot about a real or virtual pivot axis that extends in the vehicle transverse direction, or additionally in a relatively height adjustable manner.

2. A vehicle according to claim 1, **characterised in that** the central spar (5, 6) in a laterally central region of the roof opening (2) extends at least from the front lower to the rear lower edge region of the roof opening (2).

3. A vehicle according to either claim 1 or 2, **characterised in that** a coupling device connects the guide part released from the cover (1) or the connecting part (18, 19) released from the cover (1) to the rear region of the cover (1) in a rigid manner or so as to be able to pivot about a real or virtual axis that extends in the vehicle transverse direction, or additionally in a relatively height adjustable manner when moving the rear edge (4) of the cover (1) upwards out of the roof opening (2), and a decoupling device releases the connecting part (18, 19) from the cover (1) when moving the cover (1) backwards into the roof opening (2).

4. A vehicle according to any of claims 1 to 3, **characterised in that** the cover (1) has at least two cover regions (23, 24) at a lateral distance from one another, which are at least partially translucent, or that additionally at least under the translucent cover regions (23, 24) a totally or partially shared cover part, or in each case a cover part allocated separately to a translucent cover region, can move between an open position which at least mostly opens the allocated cover region (23, 24) and a closed position which at least mostly closes the allocated cover region (23, 24).

5. A vehicle according to claim 4, **characterised in that** the separate or totally or partially shared cover part is arranged in such a way that it can be adjusted in the vehicle longitudinal direction or in the vehicle transverse direction, for example by being rolled up.

6. A vehicle according to either claim 4 or 5, **characterised in that** the separate or totally or partially shared cover part is connected to at least one front region directly or indirectly via a guide element, which is adjustably guided approximately in the vehicle longitudinal direction in a designated longitudinal guide in the central spar (5, 6).

7. A vehicle according to any of claims 1 to 6, **characterised in that** the closed and or/at least partially open cover (1) can be locked to an adjacent lateral longitudinal roof spar of the vehicle roof on each of the lateral regions thereof.

8. A vehicle according to any of claims 1 to 7, **characterised in that** each of the side regions of the cover has at least one supporting face, which is supported against a designated counter-supporting face on an adjacent longitudinal roof spar of the vehicle roof when the cover is closed and/or when the cover is at least partially or fully open, either immediately or at least once the cover undergoes a small rolling movement about an ideal vehicle longitudinal axis, for example caused by the force of the wind.

9. A vehicle according to any of claims 1 to 8, **characterised in that** the cover has at least one support guide part on each of the lateral cover regions thereof, which adjustably engages in a support guide on the roof side approximately in the vehicle longitudinal direction when the cover is closed and/or when the rear edge of the cover is raised and/or when the cover is partially back in place, said support guide being formed in a lateral region of the roof opening and/or of the vehicle roof behind the roof opening.

10. A vehicle according to any of claims 1 to 9, **characterised in that** the cover (1) can be adjusted by a power transmission part of an engine which is arranged approximately in the centre of the vehicle in the vehicle transverse direction behind the roof opening (2) below the central to rear roof region of the vehicle.

11. A vehicle according to any of claims 1 to 10, **characterised in that** the closed cover is sealed by at least one sealing element in the peripheral region of the cover or at the edge of the roof opening or on a roof cassette adjustably supporting the cover or, in the absence of a roof cassette, on a vehicle component, and/or water which has penetrated the roof opening via the for example closed or partially open roof opening is discharged from water baffles on a roof cassette supporting the cover, or, in the absence of a roof cassette, from water baffles on a vehicle component.

12. A vehicle according to any of claims 1 to 11, **characterised in that** a spring-loaded air deflector (25) is arranged on the front region of the roof opening (2) in an expanded position, which deflector can be moved into a retracted position by the cover (1) or an adjusting device when closing the open cover (1).

## Revendications

1. Véhicule équipé d'un toit coulissant relevable comportant une ouverture de toit (2) pouvant être fermée par un panneau de couverture (1), et dans laquelle est monté un seul longeron médian (3), le panneau de couverture (1) pouvant être déployé vers le haut hors de l'ouverture du toit (2) et replié par son arête arrière (4), un guidage du longeron médian (5, 6) situé dans ce longeron médian (3) s'étendant essentiellement dans la direction longitudinale du véhicule, et dans lequel est guidé un élément coulissant (7, 8, 9, 10) qui est relié directement, ou par l'intermédiaire d'au moins une pièce intermédiaire, à une zone inférieure avant, latéralement médiane (17) du panneau de couverture (1) solidairement, ou de façon mobile en pivotement autour d'un axe de pivotement réel ou virtuel s'étendant dans la direction transversale du véhicule, ou en outre de façon réglable en hauteur à distance à l'arrière de l'élément coulissant (7, 8, 9, 10), étant monté, dans une zone latéralement médiane du véhicule, c'est-à-dire dans une zone médiane du véhicule dans sa direction transversale, une pièce de guidage qui est guidée dans le guidage (5, 6) du longeron médian ou dans un autre guidage du longeron médian situé dans le longeron médian, mais toutefois pas dans un guidage longitudinal (30, 31) du toit situé sur la face externe d'une zone du toit à l'arrière de l'ouverture du toit dans la direction longitudinale du véhicule, et est reliée ou peut être reliée au panneau de couverture (1) directement, ou par l'intermédiaire d'au moins une pièce de liaison (18, 19) de façon réglable longitudinalement et/ou de façon mobile en pivotement autour d'un axe de pivotement réel ou virtuel s'étendant dans la direction transversale du véhicule, ou en outre de façon relativement réglable en hauteur,
**caractérisé en ce que**
l'ouverture du toit (2) est réalisée dans la zone avant du toit du véhicule ou d'une partie du toit du véhicule qui entoure totalement l'ouverture du toit (2), et
dans le longeron médian unique (3) sont formés au moins deux guidages (5, 6) de ce longeron médian ouverts vers le haut et/ou vers le bas et/ou latéralement dans au moins une direction associée, et dans lesquels est respectivement guidé au moins un élément coulissant (7, 8, 9, 10), et les éléments coulissants (7, 9 ou 8, 10) des différents guidages du longeron médian (5, 6), sont situés à distance latérale l'un de l'autre et sont respectivement reliés directement ou par l'intermédiaire d'au moins une pièce intermédiaire, à une zone inférieure avant latéralement médiane du panneau de couverture (1), solidairement ou de façon mobile en pivotement autour d'un axe de pivotement réel ou virtuel s'étendant dans la direction transversale du véhicule, ou en outre, de façon relativement réglable en hauteur.

2. Véhicule conforme à la revendication 1,
**caractérisé en ce que**
le longeron médian (5, 6) s'étend dans une zone latéralement médiane de l'ouverture de toit (2), au moins de la zone de bord inférieure avant à la zone de bord inférieure arrière de l'ouverture de toit (2).

3. Véhicule conforme à la revendication 1 ou 2,
**caractérisé en ce que**
lors du déploiement vers le haut de l'arête arrière (4) du panneau de couverture (1) hors de l'ouverture du toit (2), un dispositif de couplage relie la pièce de guidage séparée du panneau de couverture (1) ou la pièce de liaison (18, 19) séparée du panneau de couverture (1) avec la zone arrière du panneau de couverture (1), solidairement, ou de façon mobile en pivotement autour de l'axe réel ou virtuel s'étendant dans la direction transversale du véhicule, ou en outre de façon réglable en hauteur, et, lors du repliement du panneau de couverture (1) dans l'ouverture de toit (2), un dispositif de découplage sépare la pièce de liaison (18, 19) du panneau de couverture (1).

4. Véhicule conforme à l'une des revendications 1 à 3,
**caractérisé en ce que**
le panneau de couverture (1) comporte au moins deux zones de panneau (23, 24) situées latéralement à distance l'une de l'autre qui sont au moins partiellement perméable à la lumière, ou, en outre, au moins au-dessous des zones de panneau (23, 24) perméables à la lumière une pièce de recouvrement globalement ou partiellement commune à celles-ci, ou une pièce de recouvrement respectivement séparée associée à une zone de panneau perméable à la lumière peut être déplacée entre une position ouverte libérant au moins en grande partie la zone de panneau (23, 24) associée, et une position fermée fermant au moins en grande partie la zone de panneau (23, 24) associée.

5. Véhicule conforme à la revendication 4,
**caractérisé en ce que**
la pièce de recouvrement séparée ou globalement ou partiellement commune est mobile et par exemple enroulable dans la direction longitudinale du véhicule ou dans la direction transversale du véhicule.

6. Véhicule conforme à l'une des revendications 4 et 5,
**caractérisé en ce que**
la pièce de recouvrement séparée ou globalement ou partiellement commune est reliée au moins dans une zone avant, directement ou indirectement à un élément de guidage qui est mobile dans un guidage longitudinal associé (5, 6) du longeron médian, essentiellement dans la direction longitudinale du véhicule.

7. Véhicule conforme à l'une des revendications 1 à 6,
**caractérisé en ce que**
le panneau de couverture (1) fermé et/ou au moins partiellement ouvert peut être verrouillé, dans ses zones latérales respectives sur un longeron longitudinal de toit latéral voisin du toit du véhicule.

8. Véhicule conforme à l'une des revendications 1 à 7,
**caractérisé en ce que**
le panneau de couverture comporte sur ses zones latérales respectives au moins une surface d'appui qui s'appuie, lorsque le panneau de couverture est fermé et/ou lorsque le panneau de couverture est au moins partiellement ou totalement ouvert, immédiatement ou au moins après un petit mouvement de roulement du panneau de couverture, par exemple, provoqué par la force du vent, autour de l'axe longitudinal idéal du véhicule, contre une surface d'appui antagoniste associée située sur un longeron longitudinal de toit voisin du toit du véhicule.

9. Véhicule conforme à l'une des revendications 1 à 8,
**caractérisé en ce que**
le panneau de couverture comporte, sur ses zones de panneau latérales respectives au moins une pièce de guidage de support qui, lorsque le panneau de couverture est fermé et/ou lorsque le panneau de couverture est déployé par son arête arrière et/ou lorsque le panneau est partiellement replié vient en prise de façon un peu mobile dans la direction longitudinale du véhicule, dans un guidage de support situé du côté du toit, qui est formé dans une zone latérale de l'ouverture du toit et/ou du toit du véhicule à l'arrière de l'ouverture du toit.

10. Véhicule conforme à l'une des revendications 1 à 9,
**caractérisé en ce que**
le panneau de couverture (1) peut être déplacé par une pièce de transmission de force d'un moteur qui est monté, dans la direction transversale du véhicule, essentiellement à la partie médiane de ce véhicule à l'arrière de l'ouverture du toit (2) au-dessous de la zone médiane arrière du toit du véhicule.

11. Véhicule conforme à l'une des revendications 1 à 10,
**caractérisé en ce que**
l'étanchéité du panneau de couverture fermé est assurée par au moins un élément d'étanchéité situé dans la zone périphérique de ce panneau de couverture ou au bord de ce panneau de couverture ou sur un caisson de toit s'appuyant de façon mobile sur le panneau de toit en l'absence d'un caisson de toit sur un composant du véhicule et/ou par une évacuation de l'eau ayant pénétré au travers de l'ouverture de toit, par cette ouverture par exemple fermée ou partiellement ouverte, par des parois de guidage de l'eau situées sur un caisson de toit s'appuyant sur le panneau de couverture ou, en l'absence d'un caisson de toit par des parois de guidage de l'eau situées sur un composant du véhicule.

12. Véhicule conforme à l'une des revendications 1 à 11,
**caractérisé en ce que**
dans la zone avant de l'ouverture de toit (2) est monté un déflecteur d'air (25) sollicité élastiquement dans une position déployée, et qui, lors de la fermeture du panneau de couverture (1) ouvert, peut être déplacé par le panneau (1) ou un dispositif de réglage dans une position repliée.
